(19) Europäisches Patentamt
European Patent Office
Office européen des brevets

(11) EP 2 113 456 B1

(12) **EUROPEAN PATENT SPECIFICATION**

(45) Date of publication and mention
of the grant of the patent:
**10.04.2013 Bulletin 2013/15**

(51) Int Cl.:
**B64C 1/18** (2006.01)

(21) Application number: **09158548.9**

(22) Date of filing: **23.04.2009**

(54) **Aircraft heated floor panel**

Beheizte Bodenplatte für ein Flugzeug

Panneau de plancher chauffé d'avion

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **28.04.2008 US 48293 P**

(43) Date of publication of application:
**04.11.2009 Bulletin 2009/45**

(73) Proprietor: **Goodrich Corporation
Charlotte, NC 28217-4578 (US)**

(72) Inventors:
• **Tauscher, Kurt M.
Cuyahoga Falls, OH 44221 (US)**
• **Carpino II, Richard J.
Canton, OH 44721 (US)**

(74) Representative: **Hargreaves, Timothy Edward et al
Marks & Clerk LLP
Aurora
120 Bothwell Street
Glasgow
G2 7JS (GB)**

(56) References cited:
**DE-U1- 9 218 064        JP-A- 7 032 518
US-A1- 2006 138 279**

**Description**

An aircraft commonly has a compartment (*e.g.*, a passenger cabin) wherein the floor is formed by a group of panels. The floor panels are usually supported on structural members arranged, for example, in a grid-like pattern. Heated floor panels are often used to help maintain the aircraft compartment at a comfortable temperature during flight. A heated floor panel can comprise a weight-supporting level and a heat-generating level. Some type of floor covering (*e.g.*, carpeting, tiling) is typically placed over the panels for comfort and/or appearance. The floor panel can also include a heat-insulating level to prevent heat from digressing from the aircraft compartment.

US 2006/0138279 describes an aircraft heated floor panel comprising a panel-supporting level, a heat generating level above the panel-supporting level, and an upper level that provides the primary impact-resistance for the panel and also serves as its heat-distributing layer.

SUMMARY

An aircraft heated floor panel comprises a weight-supporting level and a heat-generating level positioned below the weight-supporting level. This positioning allows the weight-supporting level to protect the heat-generating level from floor-traffic impacts (*e.g.*, high heel punctures, food cart rolling, dropped objects, dragged luggage, etc.). Thus, a separate heater-impact-protecting layer need not be used. The absence of this protection layer can reduce panel weight (*e.g.*, 10% to 20%), abate expensive material costs (*e.g.*, titanium), eliminate corresponding layer-assembly steps, and/or minimize associated panel-warping issues.

With the positioning of the heat-generating level below the weight-supporting level, a heater layer can function as a smoke/flame barrier between the supporting level and the insulation. This barrier may allow, for example, the use of less expensive adhesive, as the bonding material itself does not have to pass smoke density testing.

The weight-supporting level of the heated floor panel, and particularly its honeycomb layer, can be of standard thickness. And/or the weight-support levels of heated floor panels can have the same construction, size, and/or shape as conventional unheated floor panels. This can streamline panel production, reduce inventory requirements, and simplify mechanical qualification procedures.

DRAWINGS

Figure 1 is a perspective view of a heated floor panel installed in an aircraft.

Figure 2 is a sectional view of the heated floor panel, showing its weight-supporting level and its heat-generating level.

Figure 3 is a more detailed sectional view of the weight-supporting level.

Figure 4 is a more detailed sectional view of the heat-generating level.

Figure 5 is a diagram of the electrical heater in the heat-generating level.

Figure 6 is a diagram of heat flow patterns in a heated floor panel wherein the heat-generating level is positioned below the weight-supporting level.

Figure 7 is a diagram of heat flow patterns in a heated floor panel wherein the heat-generating level is positioned above the weight-supporting level, for the purposes of comparison.

GRAPH

Graph A is a plot of different temperature points on the floor panel as a function of time.

DESCRIPTION

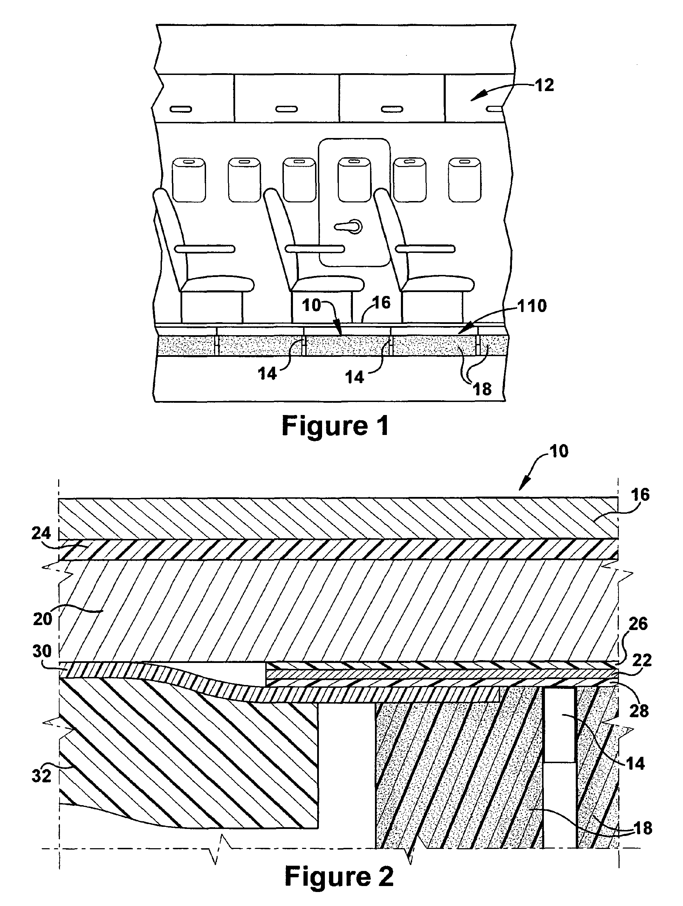

Referring now to the drawings, and initially to Figure 1, a heated aircraft floor panel 10 is shown installed in a floored compartment (*e.g.*, a passenger cabin) of an aircraft 12. The aircraft 12 comprises structural members 14 for supporting the floor panels 10 that can be arranged, for example, in a grid-like pattern. An aircraft 12 (and/or the compartment) will typically have a plurality of floor panels 10/110, and one or more of these floor panels can comprise the heated floor panel 10.

Referring additionally to Figure 2, the heated aircraft floor panel 10 can be covered by a floor covering 16, and it can further comprise a heat-insulating level 18, a weight-supporting level 20, and a heat-generating level. An adhesive layer 24 may (or may not) be used to attach the floor covering 16 to the upper surface of the weight-supporting level 20. An adhesive layer 26 may (or may not) be used to bond the lower surface of the weight-supporting level 20 to the heat-generating level 22, and/or an adhesive layer 28 may (or may not) be used to bond the heat-insulating level 18 to the heat-generating level 22.

In the heated floor panel 10, the heat-generating level 22 is positioned below the weight-supporting level 20.

The panel 10 can be characterized by the absence of a metal layer over the weight-supporting level 20. That being said, a floor panel 10 with an upper metal layer is possible and contemplated. For example, a metal layer can be situated below the floor covering 16 and/or above the weight-supporting level 20.

The floor covering 16 forms the uppermost surface of the floor panel 10 and is exposed in the aircraft compartment. Thus, it is usually selected to be comfortable to walk on and/or visually appealing. To this end, the floor covering 16 can comprise, for example, fabric carpeting or plastic tiling, and can have a height or thickness between about 1 mm and about 10 mm (although thicker/thinner coverings are possible). In any event, the coverings thickness will usually be substantially less than (*e.g.*, less than 50%, 40%, and/or 30% of) the height $H_{support}$ of the support level 20.

The floor covering 16 is often incorporated at the latter stages of panel installation. Specifically, for example, after a plurality of "cover-less" panels 10 are assembled in the aircraft 12, a continuous covering 16 will be laid over all of the panels 10.

The heat-insulating level 18 can comprise foam, that is an open-celled foam and/or a compressible foam (with about 0.5% to about 10% compression). The level 18 can additionally or alternatively comprise a closed-cell foam. The insulating level 18 will often include moisture resistant features, such as a waterproof skin and/or hydrophobic treatments.

The heat-insulating level 18 projects below the heater level 22 and/or between the structural components 14. To this end, the heat-insulating level 18 can be sized and shaped to provide uninsulated areas for receipt of structural members 14 of an aircraft 12. For example, the heat-insulating level 18 can have a length and/or width less than that of the supporting level 20 and/or the heat-generating level 22. This will provide the panel 10 with an uninsulated perimeter area.

The heater level 22 rests on (and/or is situated between or below) the structural members 14 and can be surrounded (at least partially) by the uninsulated areas. The edges of uninsulated areas can be sealed to prevent ingress of moisture into the interface between the heat-insulating level 18 and the heat-generating level 22. Additionally or alternatively the edges of the uninsulated areas can be covered to prevent chaffing against structural members 14. This sealing and/or covering can be accomplished with a flame-retardant tape 30 and/or a silicone tape 32.

The heat-insulating level 18 will usually be significantly thicker than the heat-generating level 22 and may be thicker or thinner than the weight-supporting level 20. For example, the height $H_{insulation}$ of the heat-insulating level 18 can be at least within 10% of the height $H_{support}$ of the supporting level 20, and/or it can be greater (*e.g.*, at least 10% greater, 20% greater, 30% greater, 40% greater, 50% greater, 60% greater, 70% greater, 80% greater, 90% greater, 100% greater) than the height $H_{support}$ of the weight-supporting level 20.

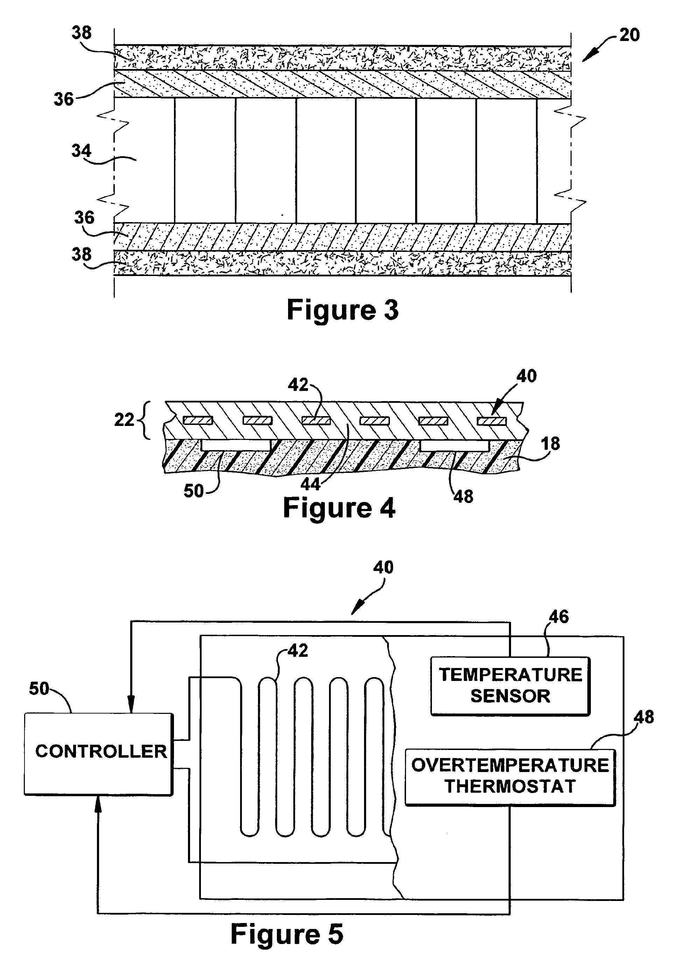

As is shown more clearly in Figure 3, the weight-supporting level 20 can comprise a honeycomb layer 34 sandwiched between non-honeycomb layers 36 and 38. The non-honeycomb layers 36/38 can be fiber-impregnated resin layers. At least one layer 36/38 can be a mechanical-strengthening layer 36 (*e.g.*, a fiberglass impregnated resin layer) and/or at least one layer 36/38 can be a deterioration-preventing layer 38 (*e.g.*, a carbon-fiber impregnated resin layer). In the illustrated embodiment, the weight-supporting level 20 includes top-bottom mechanical-strengthening layers 36 and top-bottom deterioration-preventing layers 38.

The supporting level 20 can comprise a composite of co-cured layers 34, 36, 38. The weight-supporting level 20 can be formed as a separate structure from the heat-generating level 22. Alternatively, the weight-supporting level 20 and the heat-generating level 22 together form a composite structure of co-cured layers. In either or any case, if the heat-generating level 22 is bonded to the weight-supporting level 20 by an adhesive layer 26, the adhesive can be (but is not limited to) a thermally conductive adhesive, a pressure-sensitive adhesive, a high-temperature curing adhesive, and/or an acrylic adhesive.

As is best seen by referring additionally to Figures 4 and 5, the heat-generating level 22 can comprise an electrical heater 40, such as one with a heating element 42 that generates heat upon current supply. The heating element 42 can comprise a foil element (printed, etched, or otherwise patterned) and/or resistance wire element, encapsulated in a dielectric material 44. If the formation of the heat-generating level 22 includes curing (with or separately from the support layers 34/36/38), the heating element 42 is disposed between two plies of the dielectric material 44. If the bottom layer of the weight-supporting level 20 is dielectric, only the bottom ply 44 may be necessary.

The panel 10, the heat-generating level 22, and/or the electrical heater 40 comprise a temperature sensor 46, a too-high temperature device 48, and/or a controller 50. Alternatively, the electrical heater 40 could be a low power panel with no temperature control.

If a temperature sensor 46 is present, it can be in heat-sensing contact with the heat-generating level 22, and can be used by the controller 50 to control the current (*e.g.*, switch power supply on/off) supplied to the heating element 42 during normal operation. The too-high temperature device 48 detects when a too-high temperature, (above a preset value) is reached and interrupts power to the heater level 22. The device 48 can be connected in series with current supply lines to the heater level 22 and/or can comprise a switch that switches power off when the too-high temperature is reached. In most cases, the too-high temperature device 48 will override readings of the temperature sensor 46.

The temperature sensor 46 and/or the too-high temperature device 48 can be positioned below the weight-supporting level 20, below the dielectric material 44, and above the heat-insulating level 18. The sensor 46 is less prone to overshoots due to momentary changes in cabin conditions. (See Graph A.) The stringing of electrical lines associated with the heater 40 (*e.g.*, current supply lines, temperature-sensing lines, etc.) may be facilitated by this levels lower positioning. Specifically, for example, the lines do not need to pass through the weight-supporting level on their way to a sub-floor routing ducts.

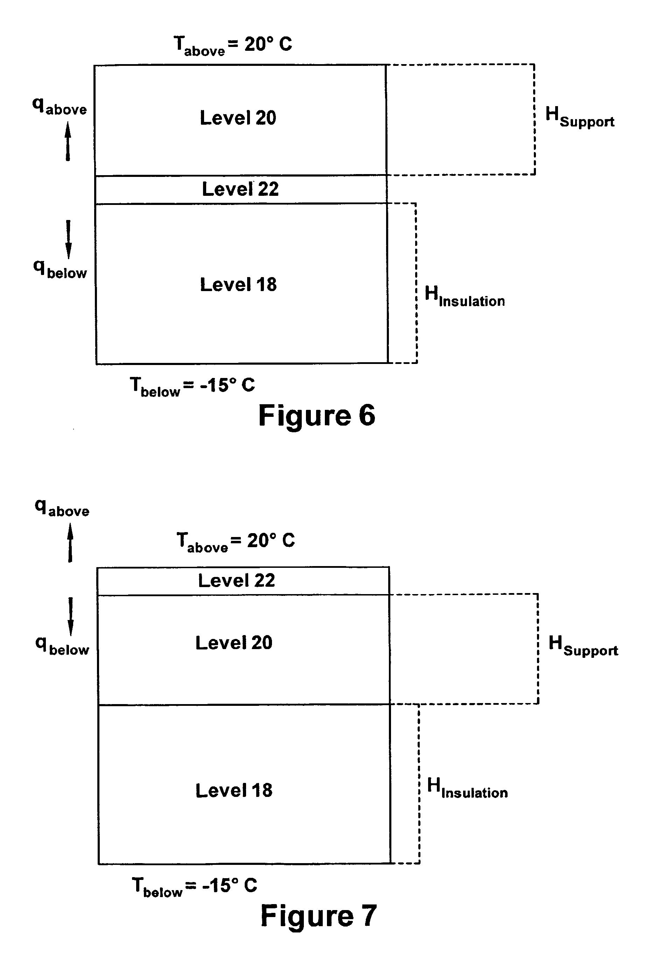

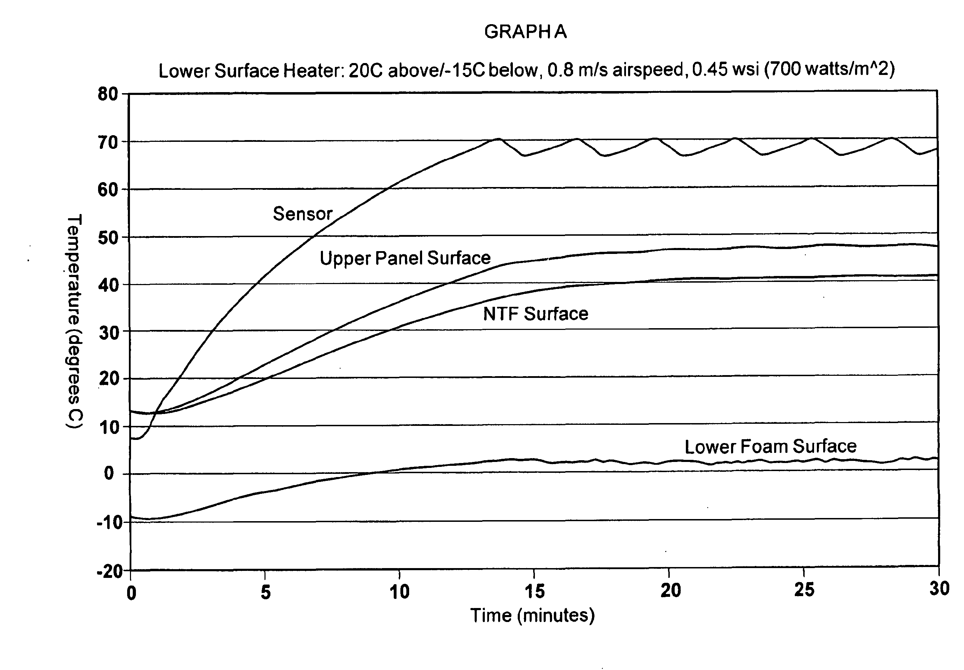

The efficiency of the heater panel 10 is driven primarily by the insulation level 18, whereby the lower positioning of the heat-generating level 22 will not significantly affect thermal performance. The heat transfer diagram for a lower heat-generating level is shown in Figure 6 and the heat transfer diagram for an upper heat-generating level is shown in Figure 7. The following parameters were assumed for the purposes of comparison:

| $T_{above}$ | 20E C |
|---|---|
| $T_{below}$ | -15E C |
| $h_{above}$ | 10 W/Km$^2$ |
| $h_{below}$ | 10 W/Km$^2$ |
| $k_{support}$ | 0.40 W/Km |
| $H_{support}$ | 0.01 m |
| $k_{insulation}$ | 0.05 W/Km |
| $H_{insulation}$ | 0.02 m |

| Theater | Figure 6 | | | | Figure 7 | | | |
|---|---|---|---|---|---|---|---|---|
| | W/m$_2$ | | | Eff | W/m$^2$ | | | eff |
| | $q_{above}$ | $q_{below}$ | $q_{total}$ | $\dfrac{q_{above}}{q_{total}}$ | $q_{above}$ | $q_{below}$ | $q_{total}$ | $\dfrac{q_{above}}{q_{total}}$ |
| 60E C | 320 | 150 | 470 | 0.68 | 400 | 143 | 543 | 0.74 |
| 65E C | 360 | 160 | 520 | 0.69 | 450 | 152 | 602 | 0.75 |
| 70E C | 400 | 170 | 570 | 0.70 | 500 | 162 | 662 | 0.75 |
| 75E C | 440 | 180 | 620 | 0.71 | 550 | 171 | 721 | 0.76 |

For heater temperatures between 60E C and 75E C (fairly representative temperature range of most electrical heaters), these rough calculations reflect a 5% drop in efficiency. This gap could be closed, for example, by using materials with higher thermal conductivity in the weight-supporting level 20. In the past, support materials with low thermal conductivity were preferred so as minimize downward heat transfer. As this is no longer true, other support materials may be explored. In most cases, such a small drop in efficiency will be insignificant, and probably outweighed by the other advantages provided by the heater panel 10.

Although the heated floor panel 10 as been shown and described with respect to certain preferred embodiments, it is obvious that equivalent and obvious alterations and modifications will occur to others skilled in the art upon the reading and understanding of this specification.

**Claims**

1. An aircraft heated floor panel (10) comprising a weight-supporting level (20) and a heat-generating level (22) positioned below the weight-supporting level (20); wherein the weight-supporting level (20) comprises a honeycomb layer (34).

2. An aircraft heated floor panel (10) as set forth in claim 1, further comprising a heat-insulating level (18) positioned below the heat-generating level (22).

3. An aircraft heated floor panel (10) as set forth In claim 1 or claim 2, **characterized by** the absence of a metal layer over the weight-supporting level (20).

4. An aircraft heated floor panel (10) as set forth in claim 1, further comprising a floor covering (16) over the weight-supporting level (20).

5. An aircraft heated floor panel (10) as set forth in claim 4, **characterized by** the absence of a metal layer between the floor covering (16) and the weight-supporting level (20).

6. An aircraft heated floor panel (10) as set forth in claim 4,
wherein the floor covering (16) and the weight-supporting level (20) are each **characterized by** the absence of a metal layer.

7. An aircraft heated floor panel (10) as set forth in claim 2 or claim 4, wherein the weight-supporting level (20) is formed as a separate structure and the heat-generating level (22) is thereafter assembled thereto, and wherein the heat-generating level (22) is bonded to the weight-supporting level (20) by an adhesive layer (26).

8. An aircraft heated floor panel (10) as set forth in claim 2 or claim 4, wherein the weight-supporting level (20) and the heat-generating level (22) together form a composite structure of co-cured layers.

9. An aircraft (12) comprising a floored compartment and at least one heated floor panel (10) as set forth in any of the preceding claims installed therein.

10. An aircraft (12) as set forth in the preceding claim, further comprising structural members (14) for supporting the heated floor panel(s) (10).

11. An aircraft (12) as set forth in either of the two preceding claims, wherein the heat-generating level (22) rests on the structural members (14).

12. An aircraft (12) as set forth in the preceding claim, comprising a plurality of unheated floor panels (110), and wherein the structural members (14) also support the unheated floor panel(s) (110).


**Patentansprüche**

1. Beheizte Flugzeug-Bodenplatte (10), die eine Gewicht tragende Ebene (20) und eine Wärme erzeugende Ebene (22), die unterhalb der Gewicht tragenden Ebene (20) angeordnet ist, umfasst, wobei die Gewicht tragende Ebene (20) eine Wabenlage (34) umfasst.

2. Beheizte Flugzeug-Bodenplatte (10) nach Anspruch 1, die ferner eine Wärme dämmende Ebene (18), die unterhalb der Wärme erzeugenden Ebene (22) angeordnet ist, umfasst.

3. Beheizte Flugzeug-Bodenplatte (10) nach Anspruch 1 oder Anspruch 2, **gekennzeichnet durch** das Nichtvorhandensein einer Metall-Lage über der Gewicht tragenden Ebene (20).

4. Beheizte Flugzeug-Bodenplatte (10) nach Anspruch 1, die ferner einen Bodenbelag (16) über der Gewicht tragenden Ebene (20) umfasst.

5. Beheizte Flugzeug-Bodenplatte (10) nach Anspruch 4, **gekennzeichnet durch** das Nichtvorhandensein einer Metall-Lage zwischen dem Bodenbelag (16) und der Gewicht tragenden Ebene (20).

6.  Beheizte Flugzeug-Bodenplatte (10) nach Anspruch 4, wobei der Bodenbelag (16) und die Gewicht tragende Ebene (20) jeweils durch das Nichtvorhandensein einer Metall-Lage gekennzeichnet sind.

7.  Beheizte Flugzeug-Bodenplatte (10) nach Anspruch 2 oder Anspruch 4, wobei die Gewicht tragende Ebene (20) als eine gesonderte Struktur geformt ist und die Wärme erzeugende Ebene (22) anschließend an dieselbe angebaut ist und wobei die Wärme erzeugende Ebene (22) durch eine Klebstofflage (26) mit der Gewicht tragenden Ebene (20) verbunden ist.

8.  Beheizte Flugzeug-Bodenplatte (10) nach Anspruch 2 oder Anspruch 4, wobei die Gewicht tragende Ebene (20) und die Wärme erzeugende Ebene (22) zusammen eine Verbundstruktur aus gemeinsam ausgehärteten Lagen bilden.

9.  Flugzeug (12), das eine mit Fußboden versehene Kabine und wenigstens eine beheizte Bodenplatte (10) nach einem der vorhergehenden Ansprüche, die in derselben eingebaut ist, umfasst.

10.  Flugzeug (12) nach dem vorhergehenden Anspruch, das ferner Strukturelemente (14) zum Tragen der beheizten Bodenplatte(n) (10) umfasst.

11.  Flugzeug (12) nach einem der beiden vorhergehenden Ansprüche, wobei die Wärme erzeugende Ebene (22) auf den Strukturelementen (14) aufliegt.

12.  Flugzeug (12) nach dem vorhergehenden Anspruch, das mehrere unbeheizte Bodenplatten (110) umfasst und wobei die Strukturelemente (14) ebenfalls die unbeheizte(n) Bodenplatte(n) (110) tragen.


**Revendications**

1.  Panneau de plancher chauffé d'avion (10) comprenant un niveau à support du poids (20) et un niveau à génération de chaleur (22), positionné au-dessous du niveau à support du poids (20) ; le niveau à support du poids (20) comprenant une couche en nid d'abeilles (34).

2.  Panneau de plancher chauffé d'avion (10) selon la revendication 1, comprenant en outre un niveau à isolation thermique (18) positionné au-dessous du niveau à génération de chaleur (22).

3.  Panneau de plancher chauffé d'avion (10) selon les revendications 1 ou 2, **caractérisé par** l'absence d'une couche métallique au-dessus du niveau à support du poids (20).

4.  Panneau de plancher chauffé d'avion (10) selon la revendication 1, comprenant en outre un revêtement de sol (16) au-dessus du niveau à support du poids (20).

5.  Panneau de plancher chauffé d'avion (10) selon la revendication 4, **caractérisé par** l'absence d'une couche métallique entre le revêtement de sol (16) et le niveau à support du poids (20).

6.  Panneau de plancher chauffé d'avion (10) selon la revendication 4, dans lequel le revêtement de sol (16) et le niveau à support du poids (20) sont chacun **caractérisés par** l'absence d'une couche métallique.

7.  Panneau de plancher chauffé d'avion (10) selon les revendications 2 ou 4, dans lequel le niveau à support du poids (20) a la forme d'une structure séparée, le niveau à génération de chaleur (22) y étant donc assemblé, le niveau à génération de chaleur (22) étant relié au niveau à support du poids (20) par une couche adhésive (26).

8.  Panneau de plancher chauffé d'avion (10) selon les revendications 2 ou 4, dans lequel le niveau à support du poids (20) et le niveau à génération de chaleur (22) forment ensemble une structure composite de couches durcies ensemble.

9.  Avion (12), comprenant un compartiment à plancher et au moins un panneau de plancher chauffé (10) selon l'une quelconque des revendications précédents qui y est installé.

**10.** Avion (12) selon la revendication précédente, comprenant en outre des éléments structuraux (14) pour supporter le(s) panneau(x) de plancher chauffé(s) (10).

**11.** Avion (12) selon l'une des deux revendications précédentes, dans lequel le niveau à génération de chaleur (22) repose sur les éléments structuraux (14).

**12.** Avion (12) selon la revendication précédente, comprenant plusieurs panneaux de plancher non chauffés (110), les éléments structuraux (14) supportant également le(s) panneau(x) de plancher non chauffé(s) (110).

**Figure 1**

**Figure 2**

**Figure 3**

**Figure 4**

**Figure 5**

$T_{above} = 20°\ C$

$q_{above}$

Level 20

$H_{Support}$

Level 22

$q_{below}$

Level 18

$H_{Insulation}$

$T_{below} = -15°\ C$

## Figure 6

$q_{above}$

$T_{above} = 20°\ C$

Level 22

$q_{below}$

Level 20

$H_{Support}$

Level 18

$H_{Insulation}$

$T_{below} = -15°\ C$

## Figure 7

**Lower Surface Heater: 20C above/-15C below, 0.8 m/s airspeed, 0.45 wsi (700 watts/m^2)**

EP 2 113 456 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060138279 A